# EUROPEAN PATENT SPECIFICATION

(11) **EP 2 112 792 B1**
(45) Date of publication and mention of the grant of the patent: **25.11.2015**
(21) Application number: 09158733.7
(22) Date of filing: 24.04.2009
(51) Int. Cl.: H04W 72/04

(54) **Radio resources allocation**
ZUTEILUNG VON FUNKBETRIEBSMITTELN
ATTRIBUTION DE RESSOURCES RADIO

(30) Priority: 25.04.2008 FR 0852781
(43) Date of publication of application: 28.10.2009
(73) Proprietor: ALCATEL LUCENT, 92100 Boulogne-Billancourt (FR)
(72) Inventor: Demerville, Laurent, 78141 Velizy (FR)
(74) Representative: El Manouni, Josiane

(56) References cited:
- EP-A- 1 045 559
- EP-A- 1 109 334

## Description

The invention concerns non-wireline (wireless or radio) communication networks and more particularly the allocation of radio resources to an uplink established between a non-wireline communication terminal and a non-wireline communication network.

In this case, a "non-wireline (or radio) communication network" shall be any kind of communication network comprising a radio access network in charge of managing, in a dynamic and centralised manner, at least the allocation of radio resources to uplinks established with non-wireline (or radio) communication terminals. This could therefore involve a network of the EDGE or EGPRS ("Enhanced GPRS"), or UMTS, or WCDMA type, or an evolutionary version of one of the abovementioned networks.

Furthermore, in this case a "non-wireline (or radio) communication terminal" shall mean any type of communication terminal capable of exchanging data via the waves with a non-wireline (or radio) communication network as defined above. This could therefore, for example, involve a mobile (or cellular) telephone, a desktop or laptop computer, a personal digital assistant (or PDA), or a content receiver (such as a decoder, a residential gateway or an STB (Set-Top Box), always provided that such devices are equipped with bi-directional means of communication capable of exchanging data by means of waves with a non-wireline (or radio) network.

Furthermore, in this case a "downlink" shall be a link from the radio network (and more specifically, from its radio access network) to a radio terminal, and an "uplink" shall be a link from a radio terminal towards a radio network (and more specifically, its radio access network).

Finally, a "radio resource" shall be a frequency channel and/or a time slot that is or are reserved for a radio terminal to enable it to communicate with a radio access network. Frequency channels and time slots are usually resources that are used within FDMA and TDMA type resources respectively. It shall be noted that a resource may be a code within a CDMA type network. It can also be a combination of a frequency channel, a time slot and a code.

As is known by a person skilled in the art, in a radio network of the above-described type the radio access network is in charge of assigning radio resources to the radio (communication) terminals that are connected to it, then to allocate (share) dynamically and in a centralised manner such radio resources among such terminals. When a radio terminal exchanges traffic with the radio access network on an uplink and/or a downlink established for such terminal for that purpose, there may be phases during which it does not need to send (operative) data on its uplink. These (idle) phases are, in particular, very frequent in the case of what is commonly referred to as interactive traffic. An example can be found in EP1045559.

During these uplink idle phases, whose cumulative duration can be significant, the radio access network does not generally allocate the maximum radio resources to the radio terminal in order not to waste them (resources allocated but not used are in fact lost while they could possibly have been used for other potentially active radio terminals, and the pertinent terminals wastefully consume the energy stored in their batteries). In fact, the radio access network can e.g. periodically allocate to the radio terminal a reduced (or restricted) number of radio resources among the radio resources initially assigned to it. These reduced (or restricted) number of resources may enable the radio terminal to reinitiate its data transmission activity after an idle phase, and therefore, when they are used by the radio terminal, to notify the radio access network of this resumption in transmission. The radio access network can then immediately allocate more radio resources to the radio terminal until the latter enters a new idle phase during which it will no longer transmit data on its uplink.

Because of this periodicity of the radio resources allocated in a reduced (or restricted) number to a radio terminal, there is a low probability that the latter may immediately reinitiate its transmission of data if so desired. Statistically, it must therefore wait for an average resumption period (i.e. the time necessary for the detection of traffic re-uptake on the uplink) before being able to allocate more resources to the radio terminal, which generates an unaccountable waste of time, therefore resulting in consumption of radio resources for a longer period of time. Furthermore, as the number of radio resources is smaller during idle phases, the radio terminal can only resume transmission in a limited manner. It is therefore necessary to find a compromise between the average resumption time and the resources allocated to a radio terminal but not used to transmit data.

The goal of the invention is therefore to improve the situation, and more precisely to reduce the resumption time for the uplink traffic, if possible without significantly increasing the consumption of radio resources.

For this purpose, it proposes a device dedicated to the allocation of radio resources to an associated uplink for a downlink, where such uplink and downlink are established between a non-wireline communication terminal and a non-wireline communication network.

This allocation device is characterized in that it comprises:
- analysis means in charge of analysing the downlink traffic in order to detect the end of transmission of data groups on such downlink, and
- allocation means in charge, in the event of detection by the analysis means of the end of transmission of data groups on the downlink, of allocating to such uplink, after a delay of a chosen duration, radio resources to anticipate a potential need for radio resources for the transmission of data by the terminal on such uplink subsequent to the reception of data transmitted over the downlink.

The device of the invention may comprise other characteristics, which may be taken separately or in combination, in particular:
- the anticipated allocation period may, e.g., present a selected duration that is substantially zero, or else comprised between approximately 500 µs (microseconds) and a few seconds;
- its means of allocation may be in charge of allocating radio resources to the uplink after the anticipated allocation period and for a selected (guard) period (which becomes a maximum period when no traffic resumption is detected);
   ➢ the duration of the anticipated allocation period (which is a guard period) may, e.g., be comprised between approximately 1 ms (milliseconds) and a few seconds;
- its analysis means may also be in charge of analysing the uplink traffic in order to detect the end of transmission of data groups on such uplink. In that case, the allocation means may, in the event of detection by the analysis means of the end of transmission of data groups on the uplink, be in charge of transitioning to a periodic allocation of a reduced number of radio resources to the uplink;
   ➢ its analysis means may be in charge of allocating a reduced number of radio resources according to a period comprised between approximately 500 µs and a few seconds.

The invention also proposes network equipment intended to be part of a non-wireline communication network and equipped with an allocation device of the type described hereinabove.

The invention also proposes a method dedicated to the allocation of radio resources to an uplink associated with a downlink, where such uplink and downlink are established between a non-wireline communication terminal and a non-wireline communication network.

This method is characterized in that it comprises the steps of: downlink traffic analysis and, in the event of data group transmission end detection on such downlink, allocation to the uplink, after a delay of a chosen duration, of radio resources to anticipate a potential need for radio resources for the transmission of data by the terminal on the uplink subsequent to the reception of data transmitted over the downlink.

The method of the invention may comprise other characteristics, which may be taken separately or in combination, in particular:
- the anticipated allocation period may, e.g., present a selected duration that is substantially zero, or else comprised between approximately 500 µs (microseconds) and a few seconds;
- it is possible to allocate radio resources to the uplink after the anticipated allocation period and for a selected (guard) period (which becomes a maximum period in the absence of a detection of traffic resumption);
   ➢ the duration of the anticipated allocation period (which is a guard period) may, e.g., be comprised between approximately 1 ms and a few seconds;
- it is also possible to analyse the traffic on the uplink and, in the event of detection of the end of transmission of data groups on such uplink, to transition to a periodic allocation of a reduced number of radio resources to the uplink;
   ➢ it is e.g. possible to allocate a reduced number of radio resources according to a period comprised between approximately 500 µs and a few seconds.

Other characteristics and advantages of the invention will become apparent upon examining the detailed description below, and the attached drawings, wherein:
- Figure 1 highly schematically and functionally depicts a non-wireline communication network comprising radio network controllers equipped with an embodiment of an allocation device according to the invention, and,
- Figure 2 schematically illustrates three timing charts representing, respectively, (A) downlink (LD) data transmission phases, (B) uplink (LM) data transmission phases, and (C) uplink (LM) radio resource allocation phases, as a function of time.

The attached drawings may serve not only to complete the invention, but also to contribute to its definition as necessary.

The goal of the invention is to improve the allocation of radio resources to an uplink established between a non-wireline communication terminal and a non-wireline communication network.

Hereafter, it shall be considered for the sake of example but not of limitation that the non-wireline communication network is a radio network of the GSM EDGE type having a GERAN (GSM EDGE Radio Access Network) type radio access network. However, the invention is not limited to this type of radio (or non-wireline) network. In fact, it concerns any kind of communication network comprising a radio access network managing, in a dynamic and centralised manner, at least the allocation of radio resources on uplinks established with non-wireline (or radio) communication terminals. Therefore, this could also be a network of the EGPRS ("Enhanced GPRS"), or UMTS, or WCDMA type, or indeed an evolutionary version of one of the abovementioned networks. It shall be noted that the invention is particularly well adapted to packet-oriented non-wireline networks.

In this case, "dynamic allocation" shall mean an allocation of the type referred to as "Dynamic Allocation" or "Extended Dynamic Allocation" within an (E)GPRS type network.

Moreover, it is assumed in the following discussion by way of example but not of limitation that such non-wireline (or radio) communication terminals are mobile (or cellular) telephones. However, the invention is not limited to this type of non-wireline (or radio) communication terminal. In fact, it refers to any type of communication terminal capable of exchanging data via waves with a non-wireline (or radio) communication network as defined above. Therefore, this could also involve a desktop or laptop computer, a device used as a modem by a computer, a personal digital assistant (or PDA), or a content receiver (such as a decoder, a residential gateway or an STB), always provided that such devices are equipped with bi-directional means of communication capable of exchanging data by means of waves with a non-wireline (or radio) network.

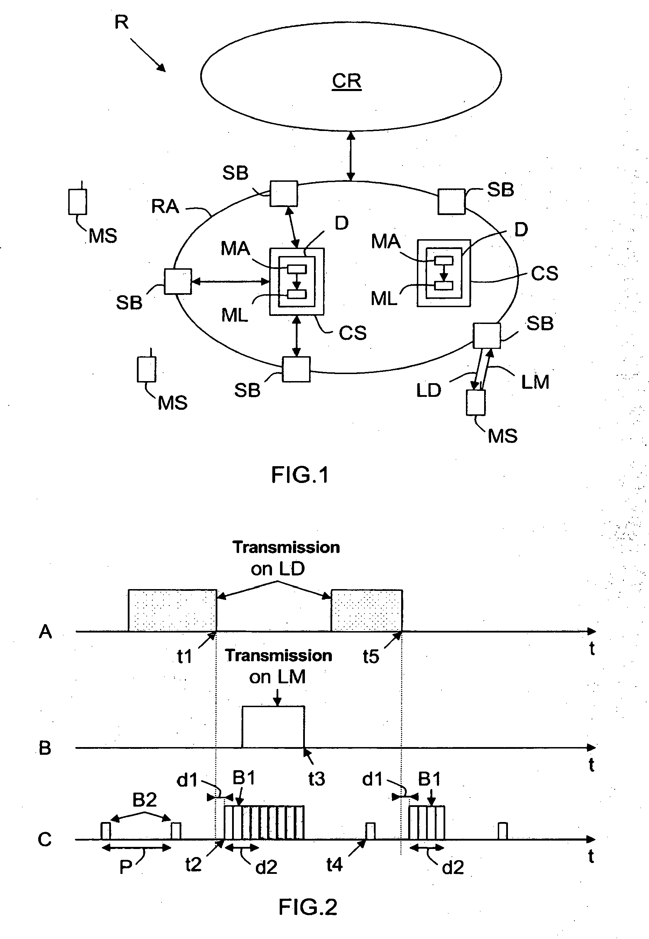

As illustrated in Figure 1, a (non-wireline communication) network R (in this case of the GSM EDGE type) may, highly schematically but nonetheless sufficiently clearly for comprehension of the invention, be summarized as a core network CR coupled to a radio access network RA (in this case of the GERAN type), itself connected to a network management system, not represented in the Figure.

The radio access network RA principally comprises base stations SB (referred to as BTSs in the case of a GERAN) and radio network controllers CS (referred to as BSCs in the case of a GERAN), which are interconnected.

Each base station SB is associated with at least one (logic) cell covering part of the radio coverage area of the network R and within which (non-wireline) communication terminals MS (in this case, mobile phones) may establish (or follow) radio communications (or links) or sessions.

Each terminal MS having established a communication or a session with the network R is connected to a base station SB by means of a downlink LD (from the network R towards it) and an uplink LM (from it to the network R).

Each radio network controller CS is associated to at least one (logic) cell and is therefore coupled to at least one base station SB.

In the embodiment illustrated by way of example but not of limitation in Figure 1, the radio access network RA comprises five base stations SB, three of which are connected to a first radio network controller CS, the two others being connected to a second radio network controller CS. However, the invention is not limited to either that number (five) of base stations SB, or to that number (two) of radio network controllers CS. In fact, it refers to radio access networks RA (for example of the GERAN or UTRAN type (in the case of UMTS)), which comprise at least two base stations SB and at least one radio network controller CS.

The invention proposes to implant in at least one place of the radio access network RA a device D in charge of allocating, in a dynamic and centralized manner, radio resources for the uplink LM.

It is pointed out that in a RA radio access network of a GERAN type, uplink and downlink radio resources called PDCHs are assigned respectively to the uplink LM and the downlink LD of what is commonly referred to as uplink and downlink TBFs (Temporary Block Flows). The radio resources assigned to those TBFs can then potentially be shared between those TBFs (by allocation in the form of radio resource blocks).

In what follows, it is assumed by way of example and not of limitation that the terminals exchange interactive type traffic with the radio access network. However, the invention is not limited to this type of traffic. Indeed, the invention applies both when the type of traffic exchanged is known in advance and when it is not known (and whether or not it is detected).

In the example illustrated by way of example but not of limitation in Figure 1, a device D according to the invention has been implanted in each radio network controller CS. However, other implantations are possible within the radio access network RA, potentially in other network equipment than the radio network controllers CS. Thus, it would e.g. be possible to use a centralized device D coupled to several (potentially all) radio network controllers CS, or else devices D distributed, coupled respectively to the different radio network controllers CS. Generally speaking, in a GERAN type radio access network, a device D is connected to what a person skilled in the art would call a PCU (or "Packet Control Unit" - the item responsible for the allocation of radio resources), which can potentially (but not necessarily) be implanted in a radio network controller.

A device D according to the invention comprises an analysis module MA and an allocation module ML coupled to each other.

The analysis module MA is in charge of analysing at least the traffic that will be using the downlink LD. It is thus able to detect each transmission end for data groups on such downlink LD.

In this case, "transmission end" means the end of an active phase during which a group of data is transmitted over an uplink LM or a downlink LD. It is important to note that an end of transmission of a data group does not necessarily correspond to an end of phase (or period) of activity. Thus, in the case of an FTP type downlink data transfer, TCP segments are sent one after the other. Upon (proper) reception of each of those TCP segments in a radio terminal, a TCP acknowledgment of receipt can potentially be generated, which means that there is not necessarily a total transmission end but rather the end of transmission of a TCP segment.

With interactive traffic, there is an alternation of active and idle phases on each of the two links, the uplink LM and the downlink LD, and generally when there is an active phase on one link, e.g. on the uplink LM, there is, at the same time, an idle phase on the complementary link, e.g. on the downlink LD.

In the illustration given by way of example and not of limitation in Figure 2, it is possible to see, on the time chart A, devoted to the downlink LD, two active (data transmission) phases preceded and followed by idle phases, and on the time chart B, devoted to the uplink LM, an active (data transmission) phase preceded and followed by idle phases and inserted between the two active phases of time chart A.

The detection of the end of transmission of data groups on the downlink LD of a radio terminal MS is designed to anticipate a potential need for resources of such radio terminal MS to transmit on its uplink LM, e.g. to provide a response to the data received. It is in fact considered in the invention that in the presence of interactive traffic there will be a high probability that the MS terminal just having received data on its downlink LD will once again move into an active phase in order to resume data transmission over the uplink LM, in some way in order to "respond" to the data it has just received.

The allocation module ML will immediately intervene, for these purposes, every time the analysis module MA indicates to it that it has detected an end of an active phase on the downlink LD of a terminal MS. As illustrated on Figure 2, each intervention consists in allocating to the uplink LM (the subject matter of the detection), after a delay d1 of a first chosen duration, radio resources B1 (or radio resource blocks B1 in the case of a GERAN). This allocation of radio resources B1 is intended to anticipate a potential need for radio resources for the transmission of data by the terminal MS on the uplink LM subsequent to the reception of data transmitted over the downlink LD. Therefore, after a predefined delay d1 (called "anticipated allocation delay") the network R makes available to the terminal MS radio resources B1 in order to enable it to transmit new data straight away if desired.

The anticipated allocation delay d1 has a first selected duration that could either be substantially zero (i.e. zero or practically zero), or non-zero (as in the illustration given by way of example but not of limitation in time chart C of Figure 2). In the latter case, the first duration of the delay d1 may, e.g., be comprised between approximately 500 µs (microseconds) and a few seconds; generally speaking, the first duration of the delay d1 is, e.g., chosen as a function of the reaction time of the device D (detection and allocation) and/or of the minimum reaction time of the terminals MS. It is in fact useless to make radio resources available to a terminal MS if it is known that its technical capabilities will not enable it to use them straight away.

As schematically illustrated by way of example and not of limitation in Figure 2, the allocation module ML allocates radio resources B1 to the uplink LM after the anticipated allocation delay d1 (which may be of zero duration) and, preferentially, during a second (selected) period d2. The second duration d2 may, e.g., be comprised between approximately 1 ms (millisecond) and a few seconds; It is important to note that this allocation period d2 must be considered to be a guard period intended to prevent the network from uselessly allocating resources to a radio terminal in cases where the latter would not ultimately have any data to transmit after the end of the transmission of a data group on its downlink LD. This (guard) period becomes a maximum period in the absence of a detection of traffic resumption.

Furthermore, as schematically illustrated by way of example and not of limitation in Figure 2, the allocation module ML preferably allocates to the uplink LM radio resources B1 that are not restricted (or limited) by comparison to a maximum number. In fact, this enables the terminal MS, which is the beneficiary, to immediately resume transmission without radio resource limitations. It shall be noted that this is only a possibility, given that the anticipated resource allocation can take place by means of a variable (and therefore potentially restricted or limited as compared to a maximum) number of resources.

In the illustration given by way of example and not of limitation in Figure 2, the analysis module MA detects the end of an active phase on the downlink LD at the moment t1 (or t5), and the allocation module ML allocates to the uplink LM four radio resource blocks B1 starting from moment t2 (t2 = t1 + d1) and for a second duration d2. The first two blocks B1 are not used by the terminal MS (which is why they are shown in light grey), while the following two blocks B1 are used by the MS (which is why they are shown in dark grey).

As the radio access network RA determines that the terminal MS transmits data on the uplink LM, it can continue to allocate to it blocks of radio resource B1 for as long as it determines that it is in an active transmission phase. As soon as it determines that the terminal MS is again in an idle phase (moment t3), it stops allocating it blocks of radio resource.

It will be noted that it is the analysis module MA that can also be in charge of analysing the traffic using the uplink LM. It is thus able to detect each transmission end for data groups on such uplink LM and to notify the allocation module ML so that it will stop allocating radio resources B1 to such uplink LM. On the other hand, the allocation module ML could be notified of the end of transmission on the uplinks LM by another network component. However, this is only an operation option.

Thanks to this notification of the end of transmission of data groups on an uplink LM, the allocation module ML can e.g. transition (or return) to a periodic allocation of a restricted number of radio resources B2 for the uplink LM. In fact, as described as a possible embodiment in the introductory section, the allocation module MA can periodically (according to a period P) allocate a reduced (or restricted) number of radio resources B2 to the uplink LM, and in parallel it performs an anticipated allocation of radio resources B1 to such uplink LM, each time the end of a transmission of data groups is detected on the associated downlink LD. Consequently, and as illustrated on the time chart C of Figure 2, when the allocation module ML has decided to stop allocating (unlimited) resources B1 to the uplink LM, subsequent to the detection of the end of activity phase, it transitions (or potentially returns) (in this case at time t4) to a periodic allocation of a reduced number of radio resources B2 to the uplink LM.

The period P, between (blocks of) radio resources B2 allocated in a reduced number, can, e.g., be comprised between approximately 500 µs and a few seconds.

It will be noted that thanks to the anticipated allocation of radio resources B1 to the uplink LM, it is possible to use a period value P which is significantly greater than (e.g. twice as big as) that which is habitually used in networks implementing a method known from the prior art. This renders it possible, in fact, to significantly reduce the radio resources that are consumed by the mechanism ensuring periodic allocation (of a reduced number of resources B2), so as to allocate them to other terminals MS that may potentially or actually require them.

Furthermore, the resource (blocks) B2 (allocated in a reduced number) correspond for example (but not by way of limitation) to 50% of the resource (blocks) B1 allocated in a non-reduced number.

It is important to note that during the anticipated allocation the network may try to allocate radio resources to a radio terminal MS on its uplink LM as a function of information (such as the presence of other radio terminals in an active phase and/or of higher priority). However, this will not always be possible.

The allocation device D according to the invention, and in particular its analysis module MA as well as its allocation module ML, may be implemented in the form of electronic circuits, software (or computing) modules, or a combination of circuits and software.

It is important to note that the invention may also be considered from the point of view of a method for the allocation of radio resources to an uplink LM that can, in particular, be implemented by means of an allocation device D as described above. As the functionalities provided by the implementation of the method according to the invention are identical to those provided by the device D introduced above, only the combination of the main functionalities provided by the method is presented hereafter.

This allocation method comprises the steps of: (downlink) traffic analysis on the downlink LD of a terminal MS and, in the event of detection of the end of a transmission of data groups on such downlink LD, allocation to the associated uplink LM, after a delay d1 of a chosen duration, of radio resources B1 to anticipate a potential need for radio resources for the transmission of data by the terminal MS on the uplink LM subsequent to the reception of data transmitted over the downlink LD.

It will be understood that, thanks to the invention, the duration of the transmission resumption delay of a terminal MS is significantly reduced as compared to the average when a method known from the prior art is implemented.

## Claims

1. Device (D) for the allocation of radio resources to an uplink (LM) associated with a downlink (LD), where said uplink (LM) and downlink (LD) are established between a non-wireline communication terminal (MS) and a non-wireline communication network (R), **characterised in that** it comprises i) analysis means (MA) arranged to analyse the traffic on said downlink (LD) so as to detect the end of a transmission of data groups on said downlink (LD), and ii) allocation means (ML) arranged, in the event of detection by said analysis means (MA) of the end of a transmission of data groups on said downlink (LD), to allocate radio resources to said uplink (LM) after a delay of a chosen duration in order to anticipate a potential need for radio resources for the transmission of data by said terminal (MS) on said uplink (LM) subsequent to reception by said terminal (MS) of said data transmitted over said downlink (LD).

2. Device according to Claim 1, **characterised in that** said anticipated allocation delay presents a selected duration that is equal to zero or practically equal to zero.

3. Device according to Claim 1, **characterised in that** said anticipated allocation delay presents a selected duration comprised between approximately 500 µs and a few seconds.

4. Device according to one of Claims 1 to 3, **characterised in that** said allocation means (ML) are arranged to allocate to said uplink (LM) radio resources following said anticipated allocation delay and during a chosen duration.

5. Device according to Claim 4, **characterised in that** said anticipated allocation delay is comprised between approximately 1 ms and a few seconds.

6. Device according to one of Claims 1 to 5, **characterised in that** said analysis means (MA) are arranged to analyse the traffic on said uplink (LM) so as to detect the end of a transmission of data groups on such uplink (LM), and **in that** said allocation means (ML) are arranged, in the event of detection by said analysis means (MA) of the end of a transmission of data groups on said uplink (LM), to transition to a periodic allocation of a reduced number of radio resources to said uplink (LM).

7. Device according to Claim 6, **characterised in that** said analysis means (MA) are arranged to allocate said reduced number of radio resources according to a period comprised between approximately 500 µs and a few seconds.

8. Network equipment (CS) for a non-wireline communication network (R), **characterised in that** it comprises at least one allocation device (D) according to one of the preceding claims.

9. Method for the allocation of radio resources to an uplink (LM) associated with a downlink (LD), where said uplink (LM) and downlink (LD) are established between a non-wireline communication terminal (MS) and a non-wireline communication network (R), **characterised in that** it comprises the steps of: analysis of the traffic on said downlink (LD) and, in the event of detection of the end of a transmission of data groups on said downlink (LD), allocation to said uplink LM, after a delay of a chosen duration, of radio resources to anticipate a potential need for radio resources for the transmission of data by said terminal (MS) on said uplink (LM) subsequent to the reception by that terminal (MS) of said data transmitted over said downlink (LD).

10. Method according to Claim 9, **characterised in that** said anticipated allocation delay presents a selected duration that is equal to zero or practical equal to zero.

11. Method according to Claim 9, **characterised in that** said anticipated allocation delay presents a selected duration comprised between approximately 500 µs and a few seconds.

12. Method according to one of Claims 9 to 11, **characterised in that** said uplink (LM) is allocated radio resources following said anticipated allocation delay and during a chosen duration.

13. Method according to Claim 12, **characterised in that** said anticipated allocation delay is comprised between approximately 1 ms and a few seconds.

14. Method according to one of Claims 9 to 13, **characterised in that** the traffic on said uplink (LM) is also analysed and, in the event of detection of the end of a transmission of data groups on said uplink (LM), a periodic allocation to said uplink (LM) of a reduced number of radio resources is transitioned to.

15. Method according to Claim 14, **characterised in that** said reduced number of radio resources is allocated according to a period comprised between approximately 500 µs and a few seconds.

## Patentansprüche

1. Vorrichtung (D) für das Zuweisen von Funkressourcen zu einem Uplink (LM), dem ein Downlink (LD) zugeordnet ist, wobei besagter Uplink (LM) und besagter Downlink (LD) zwischen einem nicht-drahtgebundenen Kommunikationsendgerät (MS) und einem nicht-drahtgebundenen Kommunikationsnetzwerk (R) hergestellt werden, **dadurch gekennzeichnet, dass** diese Vorrichtung umfasst: i) Analysemittel (MA), die eingerichtet sind für das Analysieren des Verkehrs von besagtem Downlink (LD) hinsichtlich des Feststellens des Endes einer Übertragung von Datengruppen auf besagtem Downlink (LD), und ii) Zuweisungsmittel (ML), die dafür eingerichtet sind, um im Fall des Feststellens des Endes einer Übertragung von Datengruppen auf besagtem Downlink (LD) durch besagte Analysemittel (MA) besagtem Uplink (LM) nach einer Verzögerung von ausgewählter Dauer Funkressourcen zuzuweisen, um einen potentiellen Bedarf an Funkressourcen für die Übertragung von Daten durch besagtes Endgerät (MS) auf besagtem Uplink (LM) im Anschluss an den Empfang besagter, über besagten Downlink (LD) übermittelter Daten durch besagtes Endgerät (MS) zu antizipieren.

2. Vorrichtung nach Anspruch 1, **dadurch gekennzeichnet, dass** besagte antizipierte Zuweisungsverzögerung eine ausgewählte Dauer hat, die gleich Null oder praktisch gleich Null ist.

3. Vorrichtung nach Anspruch 1, **dadurch gekennzeichnet, dass** besagte antizipierte Zuweisungsverzögerung eine ausgewählte Dauer hat, die zwischen rund 500 µs und einigen Sekunden liegt.

4. Vorrichtung nach einem der Ansprüche 1 bis 3, **dadurch gekennzeichnet, dass** besagte Zuweisungsmittel (ML) so eingerichtet sind, dass sie besagtem Uplink (LM) im Anschluss an besagte antizipierte Zuweisungsverzögerung und im Verlauf einer ausgewählten Dauer Funkressourcen zuweisen.

5. Vorrichtung nach Anspruch 4, **dadurch gekennzeichnet, dass** besagte antizipierte Zuweisungsverzögerung zwischen rund 1 ms und einigen Sekunden liegt.

6. Vorrichtung nach einem der Ansprüchen 1 bis 5, **dadurch gekennzeichnet, dass** besagte Analysemittel (MA) so eingerichtet sind, dass sie den Verkehr besagten Uplinks (LM) auf das Feststellen des Endes einer Übertragung von Datengruppen auf besagtem Uplink (LM) hin analysieren, sowie **dadurch gekennzeichnet, dass** besagte Zuweisungsmittel (ML) so eingerichtet sind, dass sie im Fall des Feststellens des Endes einer Übertragung von Datengruppen auf besagtem Uplink (LM) durch besagte Analysemittel (MA) zu einer periodischen Zuweisung einer reduzierten Zahl von Funkressourcen an besagten Uplink (LM) übergehen.

7. Vorrichtung nach Anspruch 6, **dadurch gekennzeichnet, dass** besagte Analysemittel (MA) dafür eingerichtet sind, besagte reduzierte Zahl von Funkressourcen gemäß einem Zeitraum zwischen rund 500 µs und einigen Sekunden zuzuweisen.

8. Netzwerkausstattung (CS) für ein nicht-drahtgebundenes Kommunikationsnetzwerk (R), **dadurch gekennzeichnet, dass** es mindestens ein Zuweisungsvorrichtung (D) nach einem der vorangehenden Ansprüche umfasst.

9. Verfahren für das Zuweisen von Funkressourcen zu einem Uplink (LM), dem ein Downlink (LD) zugeordnet ist, wobei besagter Uplink (LM) und besagter Downlink (LD) zwischen einem nicht-drahtgebundenen Kommunikationsendgerät (MS) und einem nicht-drahtgebundenen Kommunikationsnetzwerk (R) hergestellt werden, **dadurch gekennzeichnet, dass** das Verfahren folgende Schritte umfasst: Analyse des Verkehrs von besagtem Downlink (LD) und im Fall des Feststellens des Endes einer Übertragung von Datengruppen auf besagtem Downlink (LD) sowie nach einer Verzögerung von ausgewählter Dauer das Zuweisen von Funkressourcen zu besagtem Uplink (LM), um einen potentiellen Bedarf an Funkressourcen für die Übertragung von Daten durch besagtes Endgerät (MS) auf besagtem Uplink (LM) im Anschluss an den Empfang besagter, über besagten Downlink (LD) übermittelter Daten durch besagtes Endgerät (MS) zu antizipieren.

10. Verfahren nach Anspruch 9, **dadurch gekennzeichnet, dass** besagte antizipierte Zuweisungsverzögerung eine ausgewählte Dauer hat, die gleich Null oder praktisch gleich Null ist.

11. Verfahren nach Anspruch 9, **dadurch gekennzeichnet, dass** besagte antizipierte Zuweisungsverzögerung eine ausgewählte Dauer hat, die zwischen rund 500 µs und einigen Sekunden liegt.

12. Verfahren nach einem der Ansprüche 9 bis 11, **dadurch gekennzeichnet, dass** besagtem Uplink (LM) im Anschluss an besagte antizipierte Zuweisungsverzögerung und während einer ausgewählten Dauer Funkressourcen zugewiesen werden.

13. Verfahren nach Anspruch 12, **dadurch gekennzeichnet, dass** besagte antizipierte Zuweisungsverzögerung zwischen rund 1 ms und einigen Sekunden liegt.

14. Verfahren nach einem der Ansprüche 9 bis 13, **dadurch gekennzeichnet, dass** der Verkehr auf besagtem Uplink (LM) ebenfalls analysiert wird und dass in dem Fall, dass ein Ende der Übertagung von Datengruppen auf besagtem Uplink (LM) festgestellt wird, zu einer periodischen Zuweisung einer reduzierten Zahl von Funkressourcen an besagten Uplink (LM) übergegangen wird.

15. Verfahren nach Anspruch 14, **dadurch gekennzeichnet, dass** besagte reduzierte Zahl von Funkressourcen entsprechend einem Zeitraum zwischen rund 500 µs und einigen Sekunden zugewiesen wird.

## Revendications

1. Dispositif (D) pour l'attribution de ressources radio à une liaison montante (LM) associée à une liaison descendante (LD), lesdites liaison montante (LM) et liaison descendante (LD) étant établies entre un terminal de communication non filaire (MS) et un réseau de communication non filaire (R), **caractérisé en ce qu'**il comprend i) des moyens d'analyse (MA) conçus pour analyser le trafic sur ladite liaison descendante (LD) de sorte à détecter la fin d'une transmission de groupes de données sur ladite liaison descendante (LD), et ii) des moyens d'attribution (ML) conçus, en cas de détection par lesdits moyens d'analyse (MA) de la fin d'une transmission de groupes de données sur ladite liaison descendante (LD), pour attribuer des ressources radio à ladite liaison montante (LM) après un délai d'une durée choisie afin d'anticiper un besoin potentiel de ressources radio pour la transmission de données par ledit terminal (MS) sur ladite liaison montante (LM) suite à la réception par ledit terminal (MS) desdites données transmises sur ladite liaison descendante (LD).

2. Dispositif selon la revendication 1, **caractérisé en ce que** ledit délai d'attribution anticipé présente une durée sélectionnée qui est égale à zéro ou pratiquement égale à zéro.

3. Dispositif selon la revendication 1, **caractérisé en ce que** ledit délai d'attribution anticipé présente une durée sélectionnée comprise entre environ 500 µs et quelques secondes.

4. Dispositif selon l'une des revendications 1 à 3, **caractérisé en ce que** lesdits moyens d'attribution (ML) sont conçus pour attribuer à ladite liaison montante (LM) des ressources radio suite audit délai d'attribution anticipé et durant une durée choisie.

5. Dispositif selon la revendication 4, **caractérisé en ce que** ledit délai d'attribution anticipé est compris entre environ 1 ms et quelques secondes.

6. Dispositif selon l'une des revendications 1 à 5, **caractérisé en ce que** lesdits moyens d'analyse (MA) sont conçus pour analyser le trafic sur ladite liaison montante (LM) de sorte à détecter la fin d'une transmission de groupes de données sur une telle liaison montante (LM), et **en ce que** lesdits moyens d'attribution (ML) sont conçus, en cas de détection par lesdits moyens d'analyse (MA) de la fin d'une transmission de groupes de données sur ladite liaison montante (LM), pour passer à une attribution périodique d'un nombre réduit de ressources radio à ladite liaison montante (LM).

7. Dispositif selon la revendication 6, **caractérisé en ce que** lesdits moyens d'analyse (MA) sont conçus pour attribuer ledit nombre réduit de ressources radio conformément à une période comprise entre environ 500 µs et quelques secondes.

8. Équipement de réseau (CS) pour un réseau de communication non filaire (R), **caractérisé en ce qu'**il comprend au moins un dispositif d'attribution (D) conformément à une des revendications précédentes.

9. Procédé pour l'attribution de ressources radio à une liaison montante (LM) associée à une liaison descendante (LD), lesdites liaison montante (LM) et liaison descendante (LD) étant établies entre un terminal de communication non filaire (MS) et un réseau de communication non filaire (R), **caractérisé en ce qu'**il comprend les étapes suivantes : l'analyse du trafic sur ladite liaison descendante (LD) et, en cas de détection de la fin d'une transmission de groupes de données sur ladite liaison descendante (LD), l'attribution à ladite liaison montante (LM), après un délai d'une durée choisie, de ressources radio pour anticiper un besoin potentiel de ressources radio pour la transmission de données par ledit terminal (MS) sur ladite liaison montante (LM) suite à la réception par ce terminal (MS) desdites données transmises sur ladite liaison descendante (LD).

10. Procédé selon la revendication 9, **caractérisé en ce que** ledit délai d'attribution anticipé présente une durée sélectionnée qui est égale à zéro ou pratiquement égale à zéro.

11. Procédé selon la revendication 9, **caractérisé en ce que** ledit délai d'attribution anticipé présente une durée sélectionnée comprise entre environ 500 µs et quelques secondes.

12. Procédé selon l'une des revendications 9 à 11, **caractérisé en ce que** des ressources radio sont attribuées à ladite liaison montante (LM) suite audit délai d'attribution anticipé et durant une durée choisie.

13. Procédé selon la revendication 12, **caractérisé en ce que** ledit délai d'attribution anticipé est compris entre environ 1 ms et quelques secondes.

14. Procédé selon l'une des revendications 9 à 13, **caractérisé en ce que** le trafic sur ladite liaison montante (LM) est également analysé et, en cas de détection de la fin d'une transmission de groupes de données sur ladite liaison montante (LM), on passe à une attribution périodique d'un nombre réduit de ressources radio à ladite liaison montante (LM).

15. Procédé selon la revendication 14, **caractérisé en ce que** ledit nombre réduit de ressources radio est attribué conformément à une période comprise entre environ 500 µs et quelques secondes.
